# EUROPEAN PATENT APPLICATION

(11) **EP 4 524 863 A1**
(43) Date of publication of application: **19.03.2025**
(21) Application number: 23914493.4
(22) Date of filing: 15.12.2023
(51) Int. Cl.: G06Q 30/0207

(54) **VIRTUAL RESOURCE TRANSFER METHOD AND APPARATUS, AND DEVICE, READABLE STORAGE MEDIUM AND PRODUCT**

(30) Priority: 06.01.2023 CN 202310021186
(71) Applicant: Beijing Zitiao Network Technology Co., Ltd., Beijing 100190 (CN)
(72) Inventor: WANG, Xingyi, Beijing 100028 (CN); ZHANG, Chengcheng, Beijing 100028 (CN)
(74) Representative: Grünecker Patent- und Rechtsanwälte PartG mbB
(86) International application number: PCT/CN2023/139242
(87) International publication number: WO 2024/146359

(57) **Abstract**

The embodiment of the present disclosure provides a method for virtual resource transfer, an apparatus, a device, a readable storage medium and a product, and the method includes: displaying, in a media content generation page, a pre-generated interaction media content and a predetermined resource configuration control; determining at least one second user associated with the target interaction topic; in response to a trigger on the resource configuration control, displaying a resource configuration page; generating a resource to be transferred associated with the interaction media content according to resource configuration information generated in the resource configuration page and posting interaction media content. Therefore, after posting the interaction media content, the third user may perform a predetermined interaction operation based on the interaction control in the interaction media content, to implement transferring at least part of the resource.

## Description

The present application claims priority to Chinese Patent Application No. 202310021186.8, filed on January 6, 2023 and entitled "VIRTUAL RESOURCE TRANSFER METHOD, APPARATUS, DEVICE, READABLE STORAGE MEDIUM AND PRODUCT", the entirety of which is incorporated herein by reference.

### FIELD

Embodiments of the present disclosure relate to the technical field of interface interaction, in particular to a method for virtual resource transfer, an apparatus, a device, a readable storage medium and a product.

### BACKGROUND

The interaction manner of transferring virtual resources in various application software is relatively single, resulting in poor user interaction effect.

### SUMMARY

The embodiment of the present disclosure provides a method for virtual resource transfer, an apparatus, a device, a readable storage medium and a product, and is used for solving the technical problem of single interaction operation in an existing virtual resource transfer manner.

In a first aspect, an embodiment of the present disclosure provides a method for virtual resource transfer, applied to a client of a first user, including:
displaying, in a media content generation page, a pre-generated interaction media content and a predetermined resource configuration control, the interaction media content including an interaction control associated with a predetermined interaction operation, the interaction control including a target interaction topic, the predetermined interaction operation being associated with the target interaction topic;
determining at least one second user associated with the target interaction topic;
in response to a trigger on the resource configuration control by a first user, displaying a resource configuration page;
generating a resource to be transferred associated with the interaction media content according to resource configuration information generated in the resource configuration page;
posting the interaction media content, to enable at least one third user meeting a predetermined condition to perform the predetermined interaction operation based on the interaction control of the posted interaction media content, thereby transferring at least part of the resource to be transferred, the third user including the second user.

In a second aspect, an embodiment of the present disclosure provides a method for virtual resource transfer, applied to a client of a third user, including:
playing, in a media content playing page, an interaction media content associated with a resource to be transferred, the interaction media content including an interaction control associated with a predetermined interaction operation, the interaction control including a target interaction topic;
obtaining a predetermined interaction operation associated with the target interaction topic performed by a third user based on the interaction control;
in response to a completion of the predetermined interaction operation by the third user in a media content generation page, displaying a resource transfer control in a display page;
in response to a trigger on the resource transfer control by the third user, transferring at least part of the resource to be transferred associated with the interaction media content to the third user, the third user including a second user determined by the first user in a media content generation page for generating the interaction media content.

In a third aspect, an embodiment of the present disclosure provides an apparatus for media content processing, applied to a client of a first user, including:
a first display module, configured to display, in a media content generation page, a pre-generated interaction media content and a predetermined resource configuration control, the interaction media content including an interaction control associated with a predetermined interaction operation, the interaction control including a target interaction topic, the predetermined interaction operation being associated with the target interaction topic;
a determining module, configured to determine at least one second user associated with the target interaction topic;
a processing module, configured to, in response to a trigger on the resource configuration control by a first user, display a resource configuration page;
a generating module, configured to generate a resource to be transferred associated with the interaction media content according to resource configuration information generated in the resource configuration page by the first user;
a posting module, configured to post the interaction media content, to enable at least one third user meeting a predetermined condition to perform the predetermined interaction operation based on the interaction control of the posted interaction media content, thereby transferring at least part of the resource to be transferred, the third user including the second user.

In a fourth aspect, an embodiment of the present disclosure provides an apparatus for media content processing, applied to a client of a third user, including:
a playing module, configured to play, in a media content playing page, an interaction media content associated with a resource to be transferred, the interaction media content including an interaction control associated with a predetermined interaction operation, the interaction control including a target interaction topic;
an obtaining module, configured to obtain a predetermined interaction operation associated with the target interaction topic performed by the third user based on the interaction control;
a second display module, configured to in response to a completion of a posting operation by the third user in a media content generation page, display a resource transfer control in a display page;
a transfer module, configured to, in response to a trigger on the resource transfer control by the third user, transferring at least part of the resource to be transferred associated with the interaction media content to the third user, the third user including a second user determined by the first user in a media content generation page for generating the interaction media content.

In a fifth aspect, an embodiment of the present disclosure provides an electronic device, including a processor and a memory;
the memory stores computer-executable instructions;
the processor executes the computer-executable instruction stored in the memory, so that the at least one processor executes the method for virtual resource transfer according to the first aspect and various possible designs of the first aspect or the second aspect and various possible designs of the second aspect.

In a sixth aspect, an embodiment of the present disclosure provides a computer-readable storage medium, where the computer-readable storage medium stores computer-executable instructions, and the computer-executable instructions, when executed by the processor, implement the method for virtual resource transfer according to the first aspect and various possible designs of the first aspect or the second aspect and various possible designs of the second aspect.

In a seventh aspect, an embodiment of the present disclosure provides a computer program product including a computer program which, when executed by a processor, implements the method for virtual resource transfer according to the first aspect and various possible designs of the first aspect or the second aspect and various possible designs of the second aspect.

According to the method for virtual resource transfer, the apparatuses, the device, a readable storage medium and the product provided by the embodiment, after the predetermined generated interaction media content including the interaction control associated with the predetermined interaction operation is obtained, the resource to be transferred associated with the interaction media content may be generated in the resource configuration page in response to the trigger operation of the first user on the predetermined resource transfer control. Therefore, after posting the interaction media content, at least one third user that meets the predetermined condition may perform a predetermined interaction operation based on the interaction control in the interaction media content, to implement transferring at least part of the resource to be transferred. The interaction manner of resource transfer operation is enriched, and the user interaction effect is improved.

### BRIEF DESCRIPTION OF DRAWINGS

In order to more clearly illustrate the technical solutions in the embodiments of the present disclosure or in the prior art, the accompanying drawings used in the description of the embodiments or the prior art will be briefly introduced below, and it will be apparent that the drawings in the following description are some embodiments of the present disclosure, and those skilled in the art may also obtain other drawings according to these drawings without creative labor.
FIG. 1 is a schematic flowchart of a method for virtual resource transfer according to an embodiment of the present disclosure;
FIG. 2 is a schematic diagram of interface interaction according to an embodiment of the present disclosure;
FIG. 3 is a schematic diagram of a display page according to an embodiment of the present disclosure;
FIG. 4 is a schematic flowchart of a method for virtual resource transfer according to another embodiment of the present disclosure;
FIG. 5 is a schematic diagram of a display interface according to another embodiment of the present disclosure;
FIG. 6 is a schematic flowchart of a method for virtual resource transfer according to still another embodiment of the present disclosure;
FIG. 7 is a schematic flowchart of a method for virtual resource transfer according to still another embodiment of the present disclosure;
FIG. 8 is a schematic diagram of interface interaction according to an embodiment of the present disclosure;
FIG. 9 is a schematic structural diagram of an apparatus for media content processing according to an embodiment of the present disclosure;
FIG. 10 is a schematic structural diagram of an apparatus for media content processing according to an embodiment of the present disclosure;
FIG. 11 is a schematic structural diagram of an electronic device according to an embodiment of the present disclosure.

### DETAILED DESCRIPTION

In order to make the objectives, technical solutions and advantages of the embodiments of the present disclosure clearer, the technical solutions in the embodiments of the present disclosure will be clearly and completely described below with reference to the accompanying drawings in the embodiments of the present disclosure. Apparently, the embodiments described are part of embodiments of the present disclosure, rather than all of the embodiments. All other embodiments obtained by those skilled in the art based on the embodiments of the present disclosure without creative efforts shall fall within the scope of the present disclosure.

The present disclosure provides a method for virtual resource transfer, an apparatus, a device, a readable storage medium and a product.

It should be noted that the method for virtual resource transfer, the apparatus, device, readable storage medium, and product provided in the present disclosure may be applied to any application scenario of virtual resource transfer.

In order to enrich the interaction manner of the virtual resource transfer, the association relationship may be established between the virtual resource and the interaction media content including the interaction control associated with the predetermined interaction operation. Therefore, after posting the interaction media content, the third user that browses the interaction media content or receives the prompt information associated with the predetermined interaction operation may perform a predetermined interaction operation based on the interaction control. Further, the at least part of the virtual resource may be transferred to the third user based on the predetermined interaction operation.

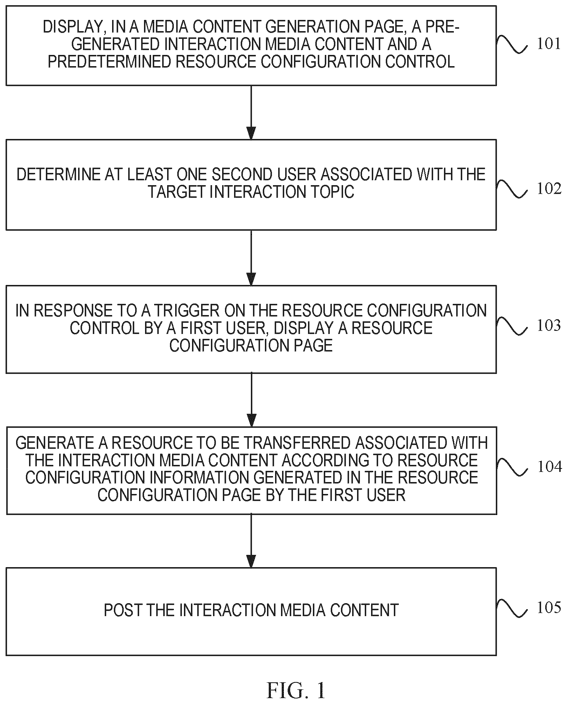

FIG. 1 is a schematic flowchart of a method for virtual resource transfer according to an embodiment of the present disclosure.

Step 101: display, in a media content generation page, a pre-generated interaction media content and a predetermined resource configuration control, the interaction media content including an interaction control associated with a predetermined interaction operation, the interaction control including a target interaction topic, the predetermined interaction operation being associated with the target interaction topic.

The execution body of the present embodiment is an apparatus for virtual resource transfer, which may be coupled to the client of the first user, so that interaction media content associated with the resource to be transferred may be generated based on the trigger operation of the first user. Alternatively, the apparatus for virtual resource transfer may be coupled to a server, and the server may be communicatively connected to the client of the first user. Therefore, the trigger operation of the first user on the client may be obtained, and the generation operation on the interaction media content associated with the resource to be transferred may be performed.

In this embodiment, the interaction media content in the media content generation page may be generated by the first user in advance, and a pre-generated interaction media content may be displayed in a media content generation page. The interaction media content may include an interaction control associated with a predetermined interaction operation. The interaction control includes a target interaction topic associated with the target interaction operation. The target interaction topic may be edited by the first user according to actual requirements, or may be selected by the first user from a plurality of predetermined interaction topics, which is not limited in the present disclosure.

By setting the interaction control, after posting the interaction media content, any third user browsing the interaction media content can view a plurality of media contents associated with the target interaction topic by triggering the interaction control, and in addition, the interaction control may be triggered to perform the predetermined interaction operation. The predetermined interaction operation may be an operation based on the target interaction topic such as commenting, sharing, or the like, or an operation of posting media content associated with the target interaction topic, or a resource transfer operation performed on the virtual commodity resource associated with the media content. Taking the operation of posting media content associated with the target interaction topic as an example, the third user may trigger the interaction control to enter the media content generation page, and the target media content associated with the target interaction topic may be generated in the media content generation page.

Further, in order to enrich the interaction manner of the virtual resource transfer operation, the media content generation page may further display a resource configuration control. In order not to block the interaction media content displayed in the media content generation page, the resource configuration control may be displayed in a display region on the upper right side. By setting the resource configuration control, the first user may generate the resource to be transferred associated with the interaction media content based on the trigger on the resource configuration control, and then perform the transfer operation on the resource to be transferred. The resource to be transferred may be a virtual resource of an application platform such as a coupon, a virtual avatar pendant, a virtual image related resource, a red packet, a gold coin, or the like.

Step 102: determine at least one second user associated with the target interaction topic.

In the present implementation, in the process of generating the interaction media content, the first user may further determine at least one second user associated with the target interaction topic.

Optionally, an invitation control may be provided in the interaction control. In response to the trigger operation performed by the first user on the invitation control, a user list may be displayed, where the user list includes a plurality of user identifiers that have a predetermined association relationship with the first user. At least one second user associated with the target interaction topic may be determined in response to a selection operation on the user list by the first user.

Further, after determining the at least one second user associated with the target interaction topic and posting the interaction media content, prompt information associated with the predetermined interaction operation may be sent to the at least one second user. Therefore, the second user may perform the predetermined interaction operation by triggering the prompt information.

Optionally, when the interaction media content is associated with the resource to be transferred, after the second user triggers the prompt information to perform the predetermined interaction operation, the transfer operation on the resource to be transferred may be implemented.

Step 103: in response to a trigger on the resource configuration control, display a resource configuration page.

In the present embodiment, the first user may implement the configuration operation of the resource to be transferred by triggering the resource configuration control. In response to the trigger on the resource configuration control by the first user, the resource configuration page may be displayed, so that the first user may perform the configuration operation of the resource to be transferred in the resource configuration page, so that the resource to be transferred may more fit the personalized requirement of the first user.

Step 104: generate a resource to be transferred associated with the interaction media content according to resource configuration information generated by the first user in the resource configuration page.

In the present implementation, the first user may generate resource configuration information in the resource configuration page, where the resource configuration information is used to indicate a resource transfer range, times of resource transfer, a total number of resource transfer, a quantity level of resource transfer of the resource to be transferred, and the like.

Further, after obtaining the resource configuration information generated by the first user in the resource configuration page, the resource to be transferred associated with the interaction media content may be generated based on the resource configuration information.

For example, the resource to be transferred is a coupon, and the resource configuration information may indicate that the resource transfer range of the coupon is that the friend of the first user can perform transfer, times of the resource transfer is 10, the total number of resource transfer is 200, and the quantity level of resource transfer may be divided into a level of 1 RMB to 5 RMB, a level of 5 RMB to 10 RMB, and a level of 10 RMB to 50 RMB. Therefore, the coupon may be generated based on the resource configuration information, so that when the interaction media content is posted, the coupon may be posted simultaneously. When the friend of the first user completes the predetermined interaction operation, the coupon may be randomly received.

Step 105: post the interaction media content, to enable at least one third user meeting a predetermined condition to perform the predetermined interaction operation based on the interaction control of the posted interaction media content, thereby transferring at least part of the resource to be transferred, the third user including the second user.

In the present embodiment, after the interaction media content and the resource to be transferred associated with the interaction media content are generated, the interaction media content may be post. Therefore, at least one third user that meets the predetermined condition may perform the predetermined interaction operation by triggering the interaction control in the interaction media content to transfer at least part of the resource to be transferred.

Optionally, the third user includes at least one second user determined by the first user.

Optionally, the third user meeting the predetermined condition is the second user. Alternatively, the third user meeting the predetermined condition may also be any user browsing the interaction media content. Alternatively, the third user meeting the predetermined condition may be any user browsing the interaction media content and having a predetermined association relationship with the first user, which is not limited in the present disclosure.

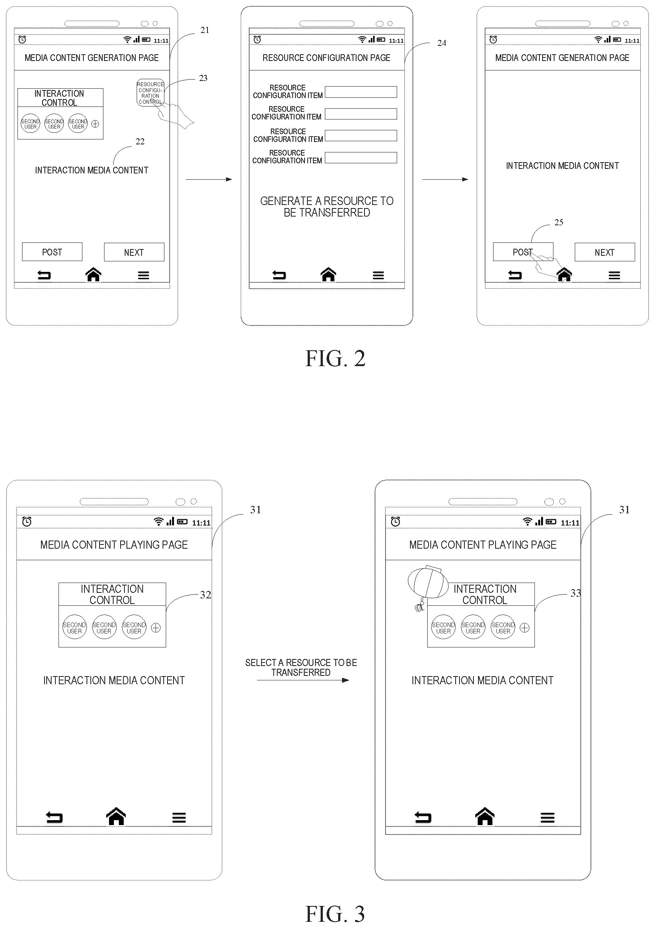

FIG. 2 is a schematic diagram of an interface interaction according to an embodiment of the present disclosure. As shown in FIG. 2, the pre-generated interaction media content 22 and the predetermined resource configuration control 23 may be displayed in the media content generation page 21. In response to the trigger operation performed by the first user on the resource transfer control 23, the resource configuration page 24 is displayed. The resource to be transferred associated with the interaction media content is generated according to the resource configuration information generated by the first user in the resource configuration page 24. In response to the trigger operation performed by the first user on the post control 25, the interaction media content is post.

In the method for virtual resource transfer provided in the present embodiment, after obtaining the pr-generated interaction media content that includes the interaction control associated with the predetermined interaction operation, in response to the trigger operation of the first user on the predetermined resource transfer control, the resource to be transferred associated with the interaction media content may be generated within the resource configuration page. Therefore, after posting the interaction media content, the third user can perform a predetermined interaction operation based on the interaction control in the interaction media content, to implement the transfer operation on at least part of the resource to be transferred. The interaction manner of resource transfer operation is enriched, and the user interaction effect is improved.

Further, on the basis of any one of the above embodiments, after step 104, the method further includes:
determining whether a current date matches any certain date;
if yes, switching a display style of the interaction control to a target display style corresponding to the certain date. And/or
after step 104, the method further includes:
determining a resource type corresponding to the resource to be transferred.
switching a display style of the interaction control to a target display style matching the resource type.

In the present embodiment, in order to enrich the display effect of the interaction media content, the interaction control in the interaction media content may display different display styles.

Optionally, it may be determined whether the current date matches any particular date. The particular date includes, but is not limited to, a traditional festival such as Spring Festival, Autumn Festival, New Year's Day, and Dragon Boat Festival. If it is detected that the current date matches any particular date, the display style of the interaction control may be switched to the target display style corresponding to the particular date.

For example, if the current date matches the Spring Festival, a decoration effect matching the Spring Festival may be displayed on the interaction control, for example, images such as spring festival scrolls, lantern, and popping bamboo may be displayed. Therefore, the display effect of the interaction control is more attractive.

**Optionally,** the resource type corresponding to the resource to be transferred may also be determined. The resource type corresponding to the resource to be transferred includes a festival resource type, a common resource type, and the like. The display style of the interaction control may be switched to the target display style matching the resource type.

For example, when the resource type corresponding to the resource to be transferred is the festival resource type, the decoration effect associated with the festival may be displayed on the interaction control, and when the resource type corresponding to the resource to be transferred is the common resource type, the interaction control may be displayed in a conventional display effect.

**It** should be noted that the above two implementations may be implemented separately or in combination. When the resource type corresponding to the resource to be transferred is the festival resource type, the interaction control may display the display style associated with the festival, otherwise, the interaction control may display a conventional display effect.

FIG. 3 is a schematic diagram of a display page according to an embodiment of the present disclosure. As show in FIG. 3. If it is determined that the current date does not match any specific date, the interaction control 32 may be displayed in the interaction media content 31 in a conventional style. If it is determined that the current date matches any specific date, for example, if the current date matches the Spring Festival, the resource type corresponding to the resource to be transferred is the festival resource type corresponding to the Spring Festival, and the interaction control 33 of the target display style corresponding to the festival resource type may be displayed in the interaction media content 31 according to the festival resource type.

According to the method for virtual resource transfer provided by the embodiment, the target display style of the interaction control is determined according to whether the current date matches with the particular date or not, or the target display style of the interaction control is determined according to the resource type corresponding to the resource to be transferred, so that the interaction control may display different display styles under different scenes, the display effect of the interaction control is enriched, and the user interaction effect is improved.

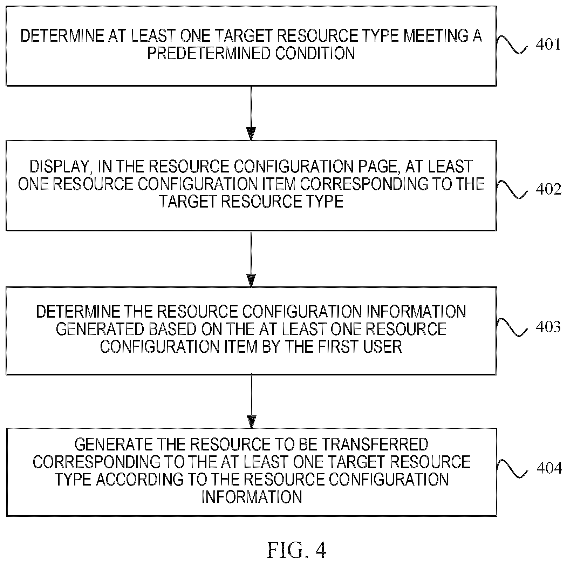

FIG. 4 is a schematic flowchart of a method for virtual resource transfer according to another embodiment of the present disclosure. Based on any one of the above embodiments, step 104 includes:

Step 401: determine at least one target resource type meeting a predetermined condition.

Step 402: display, in the resource configuration page, at least one resource configuration item corresponding to the target resource type.

Step 403: determine the resource configuration information generated based on the at least one resource configuration item.

Step 404: generate the resource to be transferred corresponding to the at least one target resource type according to the resource configuration information.

In the present embodiment, the resource to be transferred includes at least two resource types, for example, it may include a festival resource type, a common resource type, or the like. When the first user performs resource configuration, at least one target resource type meeting a predetermined condition may be determined, and the resource configuration operation is performed on the current at least one target resource type.

Optionally, after determining the at least one target resource type meeting the predetermined condition, at least one resource configuration item corresponding to the target resource type may be displayed in the resource configuration page. The resource configuration item includes, but is not limited to, a resource transfer number item, a resource transfer times item, a resource transfer quantity level item, and the like.

Resource configuration information generated by the first user based on at least one resource configuration item corresponding to the target resource type is determined. The resource to be transferred corresponding to the at least one target resource type according to the resource configuration information is generated.

By generating the resource to be transferred corresponding to the at least one target resource type, after posting the interaction media content, the third user may perform a selection operation on the target resource type to obtain the resource to be transferred that is closer to the actual requirement.

According to the method for virtual resource transfer provided by the embodiment, the target resource type meeting the predetermined condition is determined, and the configuration operation on the resource to be transferred is carried out according to the at least one resource configuration item corresponding to the target resource type to obtain the resource to be transferred, so that the finally generated resource to be transferred is more consistent with the personalized requirements of the user. In addition, by setting at least two resource types, the resource transfer operation may be more diversified, and the user interaction effect is improved.

Optionally, based on any one of the above embodiments, the resource configuration page includes the at least two resource types. Step 401 includes:
in response to a selection of the resource type by the first user, determining at least one target resource type selected by the first user.

In the present embodiment, the resource configuration page includes the at least two resource types. The first user may select the resource type according to actual requirements. Optionally, the selection operation on the resource type may be implemented in any interaction manner such as clicking, double-clicking, and long pressing on the resource type, which is not limited in the present disclosure. In response to the first user's selection operation on the resource type, the at least one resource type selected by the first user may be determined as the at least one target resource type.

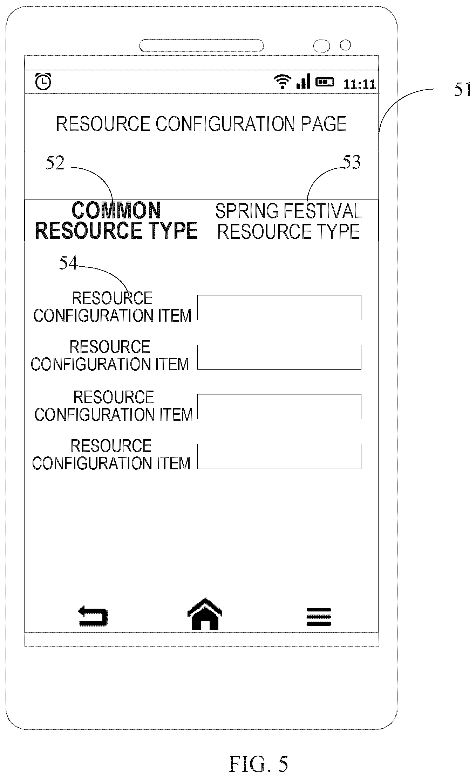

FIG. 5 is a schematic diagram of a display interface according to still another embodiment of the present disclosure. As shown in FIG. 5, the resource configuration page 51 may include a common resource type 52 and Spring Festival resource type 53. Each resource type corresponds to at least one resource configuration item 54. The first user may select the target resource type for the configuration operation of the resource to be transferred according to the actual requirement.

According to the method for virtual resource transfer provided in the present embodiment, the at least one target resource type selected by the first user is determined in response to the first user's selection operation on the resource type, so that the target resource type may be quickly determined. In addition, by setting at least one target resource type, an interaction manner of resource transfer operations may be enriched.

**Optionally,** based on any one of the above embodiments, step 401 includes:
determining a target resource type, the target resource type being determined based on at least one of: a certain date matching a current date, a media content type corresponding to the interaction media content, a topic type corresponding to the target interaction topic, or an interaction type corresponding to the predetermined interaction operation.

In the present embodiment, the target resource type may be determined according to one or more of: a particular date matching the current date, a media content type corresponding to the interaction media content, a topic type corresponding to the target interaction topic, and an interaction type corresponding to the predetermined interaction operation.

For example, if a particular date matching the current date is Spring Festival, and a topic type corresponding to the target interaction topic is a Spring Festival related topic, it may be determined that the target resource type is a festival resource type.

According to the method for virtual resource transfer provided by the embodiment, the target resource type is determined according to one or more of: the particular date matching with the current date, the media content type corresponding to the interaction media content, the topic type corresponding to the target interaction topic and the interaction type corresponding to the predetermined interaction operation, so that the association between the target resource type and the interaction media content, the current date, the topic type and the interaction type may be improved.

Further, on the basis of any one of the above embodiments, after step 105, the method further includes:
displaying, in a display page, a resource transfer control;
in response to a trigger on the resource transfer control, transferring the at least part of the resource to be transferred to the first user.

In the present embodiment, the first user may also perform a transfer operation on the resource to be transferred posted by the first user. After the first user completes the post of the interaction media content, the resource transfer control may be displayed on the display page. In response to the trigger operation performed by the first user on the resource transfer control, the at least part of resource to be transferred may be transferred to the first user.

In the method for virtual resource transfer provided in the present embodiment, after posting the interaction media content, the resource transfer control is displayed on the display page. In response to the trigger operation performed by the first user on the resource transfer control, the at least part of the resource to be transferred is transferred to the first user, so that the first user may implement the transfer operation on the resource to be transferred posted by the first user.

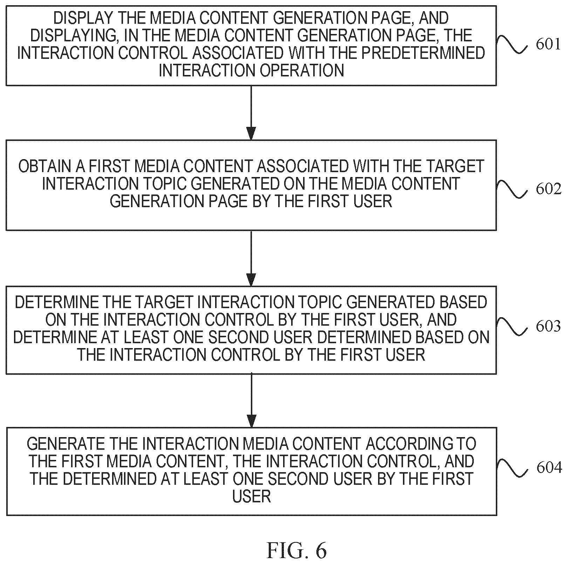

FIG. 6 is a schematic flowchart of a method for virtual resource transfer according to still another embodiment of the present disclosure.

Step 601: display the media content generation page, and displaying, in the media content generation page, the interaction control associated with the predetermined interaction operation.

Step 602: obtain a first media content associated with the target interaction topic generated by the first user in the media content generation page.

Step 603: determine the target interaction topic generated by the first user based on the interaction control, and determine at least one second user determined by the first user based on the interaction control.

Step 604: generate the interaction media content according to the first media content, the interaction control, and the determined at least one second user.

In the present embodiment, before the resource to be transferred associated with the interaction media content is generated, the interaction media content needs to be generated first.

Optionally, the media content generation page may be displayed, and an interaction control associated with the predetermined interaction operation may displayed in the media content generation page. The interaction control may be displayed after the first user triggers the trigger control corresponding to the predetermined interaction operation in the media content generation page.

The first media content associated with the target interaction topic is generated by the first user in the media content generation page. The first media content may be obtained by the first user through a predetermined content obtaining control. The content obtaining control may include a content generating control and a content uploading control.

The interaction control is preset with an input control for generating a target interaction topic. The first user may manually input the target interaction topic based on the input control, or the first user may also select the target interaction topic from a plurality of predetermined topics based on the input control, which is not limited in the present disclosure. In addition, the first user may further, based on the interaction control, perform a selection operation of the at least one second user. The interaction control may be provided with an invitation control. In response to the trigger operation performed by the first user on the invitation control, a user list may be displayed, where the user list includes a plurality of user identifiers that have a predetermined association relationship with the first user. At least one second user associated with the target interaction topic may be determined in response to a selection operation on the user list by the first user.

Further, the interaction media content may be generated according to the first media content, the interaction control, and the at least one second user determined by the first user.

According to the method for virtual resource transfer provided in the present embodiment, before the resource to be transferred is generated, the interaction media content including the interaction control corresponding to the predetermined interaction operation is pre-generated in the media content generation page, so that the third user may perform the predetermined interaction operation based on the interaction control subsequently, so that the transfer operation of the resource to be transferred is realized, and the interaction manner of the resource transfer operation is enriched.

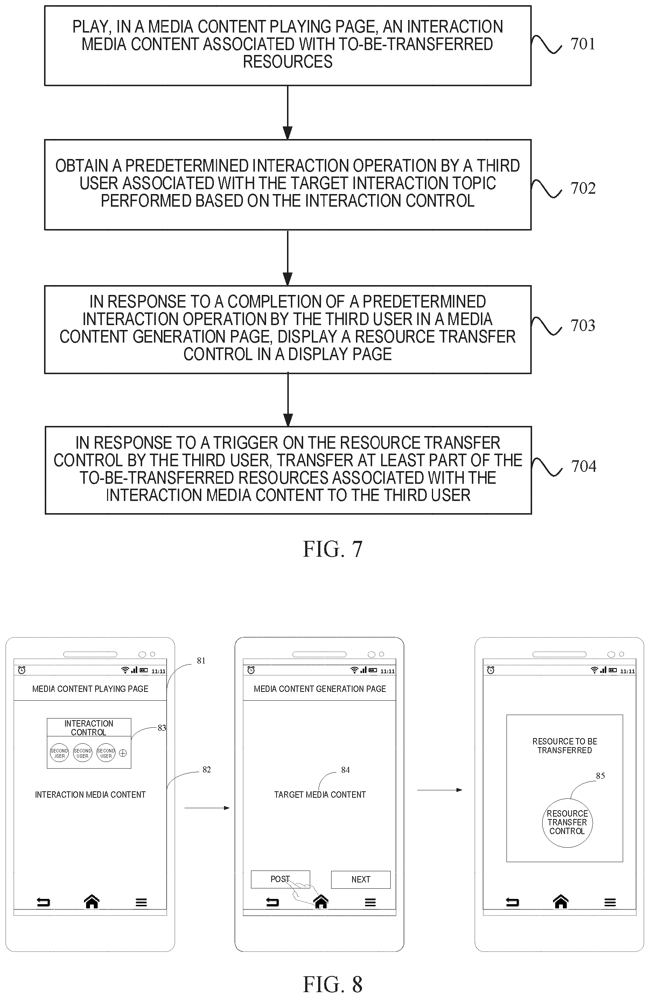

FIG. 7 is a schematic flowchart of a method for virtual resource transfer according to still another embodiment of the present disclosure, which is applied to a client of a third user. As is shown in FIG. 7, the method includes:
Step 701: play, in a media content playing page, an interaction media content associated with a resource to be transferred, the interaction media content including an interaction control associated with a predetermined interaction operation, the interaction control including a target interaction topic.
Step 702: obtain a predetermined interaction operation associated with the target interaction topic performed by the third user based on the interaction control
Step 703: in response to a completion of the predetermined interaction operation by the third user in a media content generation page, display a resource transfer control in a display page.
Step 704: in response to a trigger on the resource transfer control by the third user, transfer at least part of the resource to be transferred associated with the interaction media content to the third user, the third user including a second user determined by the first user in a media content generation page for generating the interaction media content.

The execution body of the present embodiment is an apparatus for virtual resource transfer, and the apparatus for virtual resource transfer may be coupled to the client of the third user, so that the transfer operation on the resource to be transferred may be performed based on the trigger operation of the third user. Alternatively, the apparatus for virtual resource transfer may be coupled to a server, and the server may be communicatively connected to the client of the third user. Therefore, the trigger operation of the third user on the client may be obtained, and the transfer operation of the resource to be transferred may be performed.

In the present embodiment, the interaction media content associated with the resource to be transferred may be played in the media content play page, where the interaction media content includes an interaction control associated with the predetermined interaction operation, and the interaction control includes the target interaction topic. In response to the trigger operation performed by the third user on the interaction control, the predetermined interaction operation associated with the target interaction topic performed by the third user based on the interaction control may be obtained. For example, the predetermined interaction operation includes but is not limited to the generation and posting operations of the media content associated with the target interaction topic, the interaction operation based on the game effect, the control of the virtual character to perform the predetermined action, and the like.

In response to the third user completing the predetermined interaction operation on the media content generation page, the resource transfer control is displayed in the display page. In response to the trigger operation performed by the third user on the resource transfer control, the at least part of resource to be transferred associated with the interaction media content may be transferred to the third user.

For example, the predetermined interaction operation may be generation and posting operations of media content associated with the target interaction topic. In response to the trigger operation performed by the third user on the interaction control, the third user may go to the media content generation page, so that the third user generates the target media content associated with the target interaction topic in the media content generation page. In response to the posting operation triggered by the third user for the target media content, the resource transfer control may be displayed in the display page. In response to the trigger operation performed by the third user on the resource transfer control, the at least part of the resource to be transferred associated with the interaction media content may be transferred to the third user.

**It** should be noted that the third user includes a second user determined by the first user through the interaction control, the third user may also be a user browsing the interaction media content that has a predetermined association relationship with the first user, and the third user may also be a user browsing the interaction media content that does not have a predetermined association relationship with the first user, for example, the third user is a user who has an attention relationship with the first user, which is not limited in the present disclosure.

FIG. 8 is a schematic diagram of an interface interaction according to an embodiment of the present disclosure. As shown in FIG. 8, interaction media content 82 associated with resources to be transferred is played in the media content playback page 81. Interaction media content 82 includes interaction controls 83 associated with predetermined interaction operations, and interaction controls 83 includes target interaction topic 84. Taking that the predetermined interaction operation being posting target media content associated with the target interaction topic as an example, the target media content 84 generated by the third user based on the interaction control 83 may be obtained. In response to the third user completing the posting operation of the media content generating page, the resource transfer control 85 is displayed in the display page. In response to the trigger operation performed by the third user on the resource transfer control 85, the transfer operation of the resource to be transferred may be performed.

Further, on the basis of any one of the above embodiments, step 701 includes:
in response to a switching operation by a third user on a media content stream in the media content playing page, playing the interaction media content associated with the resource to be transferred.
   or,
obtaining interaction reminder information associated with the predetermined interaction operation, and in response to a trigger on the interaction reminder information by the third user, playing the interaction media content associated with the resource to be transferred.

In the present embodiment, the third user may perform a browsing operation of the media content stream in the media content play page, where the interaction media content may be one piece of media content in the media content stream. In the process of switching and viewing the media content stream, the interaction media content associated with the resource to be transferred may be played in the media content play page.

As an implementable manner, when the third user is the second user determined by the first user through the interaction control, the interaction prompt information associated with the predetermined interaction operation may be obtained. In response to the trigger operation performed by the third user on the interaction reminder information, the interaction media content associated with the resource to be transferred may be played in the media content play page.

According to the method for virtual resource transfer provided by the embodiment, through playing the interaction media content, the resource transfer control is displayed according to the predetermined interaction operation performed by the third user based on the interaction control, and at least part of the resource to be transferred associated with the interaction media content is transferred to the third user according to the trigger operation of the third user on the resource transfer control, so that the transfer operation of the resource to be transferred may be realized based on the interaction operation of the third user based on the interaction media content, the interaction manner of the resource transfer operation is enriched, and the user interaction effect is improved.

Further, on the basis of any one of the above embodiments, step 702 includes:
**in** response to a trigger on the interaction control, displaying the media content generation page, the media content generation page including the interaction control.
obtaining a target media content associated with the target interaction topic generated in the media content generation page and posting the target media content, thereby completing the predetermined interaction operation.

**In** the present embodiment, the predetermined interaction operation may be generation and posting operations of media content associated with the target interaction topic. In response to the trigger operation performed by the third user on the interaction control, the media content generation page may be displayed, where the media content generation page includes an interaction control. The third user may generate the target media content associated with the target interaction topic in the media content generation page, and post the target media content, that is, the predetermined interaction operation may be completed. Optionally, the third user may generate the target media content through a predetermined content obtaining control in the media content generation page, where the content obtaining control includes a content uploading control and a content obtaining control.

It should be noted that the target media content also includes an interaction control of the target interaction topic. After the target media content is posted, more users may generate and post the media content associated with the target interaction topic based on the interaction control.

According to the method for virtual resource transfer provided by the embodiment, the media content generation page is displayed in response to the trigger operation of the third user on the interaction control, the target media content generated by the third user in the media content generation page and associated with the target interaction topic is obtained, and the predetermined interaction operation is obtained, so that the transfer operation on the resource to be transferred may be realized based on the target media content associated with the target interaction topic posted by the third user, so that more third users may perform the predetermined interaction operation, and in addition, the interaction manner of the resource transfer operation may be enriched.

Optionally, on the basis of any one of the above embodiments, the resource to be transferred includes at least two resource types; and step 704 includes:
in response to that the third user selects the resource type to be obtained, transferring at least part of the resource to be transferred corresponding to the resource type to be obtained that is selected by the third user to the third user.

In the present embodiment, the resource to be transferred may include at least two resource types. In the resource transfer process, the third user may select a resource type according to the personalized requirement, to perform a transfer operation on the resource to be transferred corresponding to the selected resource type.

In response to the trigger operation performed by the third user on the resource transfer control, at least two resource types corresponding to the resource to be transferred may be displayed for selection by the third user. In response to that the third user selects the resource type to be obtained, at least part of the resource to be transferred corresponding to the resource type to be obtained that selected by the third user is transferred to the third user.

According to the method for virtual resource transfer provided by the embodiment, at least part of the resource to be transferred corresponding to the resource type to be obtained that is selected by the third user is transferred to the third user in response to that the third user selects the resource type to be obtained, so that each third user may realize the transfer operation on the resource to be transferred that meets the personalized requirement, and the user interaction effect is further improved.

**Optionally,** based on any one of the above embodiments, step 704 includes:
in response that the third user is the second user, determining at least one first resource type corresponding to the second user.
in response to a selection of the at least one first resource type by the third user, transferring at least part of the resource to be transferred corresponding to the selected target first resource type by the third user to the third user.

Alternatively, step 704 includes:
in response that the third user is not the second user, determining a second resource type corresponding to the third user;
transferring the at least part of the resource to be transferred corresponding to the second resource type to the third user.

**In** the present embodiment, the third user includes a second user determined by the first user through the interaction control, the third user may also be a user browsing the interaction media content that has a predetermined association relationship with the first user, and the third user may also be a user browsing the interaction media content that does not have a predetermined association relationship with the first user. In order to further enrich the interaction manner of resource transfer operations, for different third users, the resource to be transferred are different.

Optionally, because the resource type corresponding to the resource to be transferred may be at least one, the third user may select the resource to be transferred corresponding to any resource type to perform the transfer operation according to the actual requirement. At least one first resource type corresponding to the third user is determined. In response to the selection operation performed by the third user on the at least one first resource type, at least part of the resource to be transferred corresponding to the target first resource type selected by the third user is transferred to the third user. For example, when the third user is the second user, the resource type that can be transferred includes the festival resource type and the common resource type. The third user may select a resource to be transferred corresponding to a resource type to perform transfer operation according to an actual requirement.

Optionally, the third user may also transfer the resource to be transferred corresponding to the predetermined resource type, determine a second resource type corresponding to the third user, and transfer at least part of the resource to be transferred corresponding to the second resource type to the third user.

According to the method for virtual resource transfer provided in the present embodiment, the resource type that can be currently transferred by the third user is determined according to the type of the third user, so that the resource transfer operation is more consistent with the type of the third user, the interaction manner of the resource transfer operation can be further enriched, and the user interaction effect is improved.

Further, on the basis of any one of the above embodiments, step 704 includes:
determining whether the third user is the second user, and obtaining a determination result, and/or determining a completion status of the predetermined interaction operation performed by the third user based on the interaction control;
determining a resource transfer quantity level according to the determination result and/or the completion status;
in response to the trigger on the resource transfer control by the third user, transferring, to the third user, a target resource among the resource to be transferred matching the resource transfer quantity level.

**In** the present embodiment, different resource transfer quantity levels may correspond to different types of third users and/or completion statuses of predetermined interaction operations.

Therefore, it may be determined whether the third user is the second user determined by the first user, to obtain a judgment result. And/or, a completion status of a predetermined interaction operation performed by the third user based on the interaction control may be determined. A resource transfer quantity level may be determined according to the determination result and/or the completion status. In response to the trigger operation performed by the third user on the resource transfer control, the target resource that matches the resource transfer quantity level of the resource to be transferred is transferred to the third user.

For example, the resource to be transferred is a coupon, and the resource transfer quantity level may include a level of 1 RMB to 5 RMB, a level of 6 RMB to 10 RMB, and a level of 11 RMB to 50 RMB. If the third user is the second user, and the predetermined interaction operation has been completed, the coupon with a level of 5 RMB may be received. If the third user has completed the predetermined interaction operation but the third user is not the second user, the coupon with a level of 6 RMB to 10 RMB may be received.

According to the method for virtual resource transfer provided in the present embodiment, the resource transfer quantity level corresponding to the third user is determined according to the type of the third user and/or the completion status of the predetermined interaction operation performed by the interaction control, so that the resource transfer operation may be accurately performed based on the resource transfer quantity level, and the resource transfer quantity may be more matched with the type of the third user and/or the completion status of the predetermined interaction operation performed by the interaction control.

Further, on the basis of any one of the above embodiments, the interaction control in the interaction media content is displayed in a first display style corresponding to a particular date or a resource type corresponding to the resource to be transferred.

In the present embodiment, in the interaction media content posted by the first user, the interaction control may be displayed in a first display style corresponding to a particular date or a resource type corresponding to the resource to be transferred. For example, when the current date is Spring Festival, the interaction control of the Spring Festival display style may be displayed in the interaction media content.

Further, on the basis of any one of the above embodiments, the interaction control in the target media content associated with the target interaction topic generated by the third user based on the interaction control is displayed in a predetermined second display style.

**In** the present embodiment, after the third user posts the target media content based on the interaction control in the interaction media content, the interaction control in the target media content may be displayed in a predetermined second display style.

According to the method for virtual resource transfer provided in the present embodiment, the interaction control of the first display style corresponding to the particular date or the resource type corresponding to the resource to be transferred is displayed in the interaction media content, and the predetermined interaction control of the second display style is displayed in the target media content, so that the display effect of the interaction control can be enriched, and the user interaction effect is improved.

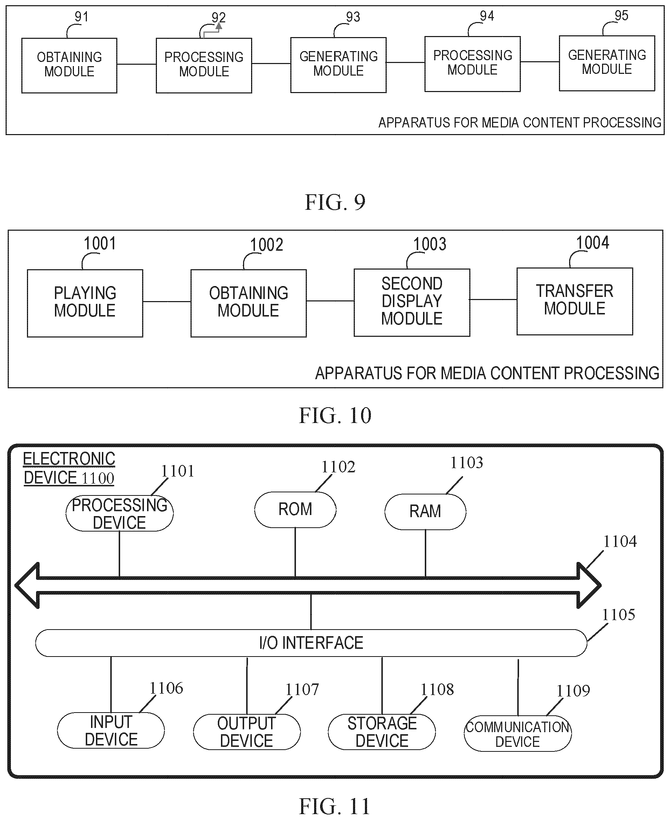

FIG. 9 is a schematic structural diagram of an apparatus for media content processing according to an embodiment of the present disclosure, which is applied to a client of the first user. As is shown in FIG. 9, the apparatus for media content processing includes a first display module 91, a determining module 92, a processing module 93, a generating module 94, and a posting module 95. The first display module 91 is configured to display, in a media content generation page, a pre-generated interaction media content and a predetermined resource configuration control, the interaction media content including an interaction control associated with a predetermined interaction operation, the interaction control including a target interaction topic, the predetermined interaction operation being associated with the target interaction topic; a determining module 92, configured to determine at least one second user associated with the target interaction topic; a processing module 93, configured to, in response to a trigger on the resource configuration control by a first user, display a resource configuration page; a generating module 94, configured to generate a resource to be transferred associated with the interaction media content according to resource configuration information generated by the first user in the resource configuration page; and a posting module 95, configured to post the interaction media content, to enable at least one third user meeting a predetermined condition to perform the predetermined interaction operation based on the interaction control of the posted interaction media content, thereby transferring at least part of the resource to be transferred, the third user including the second user.

Further, on the basis of any one of the above embodiments, the apparatus further includes: a determining module, configured to determine whether a current date matches any certain date. A switching module, configured to, if yes, switch a display style of the interaction control to a target display style corresponding to the certain date. The apparatus further includes: a determining module, configured to a resource type corresponding to the resource to be transferred. The switching module is further configured to switch a display style of the interaction control to a target display style matching the resource type.

Further, on the basis of any one of the above embodiments, the third user meeting the predetermined condition is the second user.

Further, on the basis of any one of the above embodiments, the resource to be transferred includes at least two resource types. The generating module is configured to determine at least one target resource type meeting a predetermined condition; display, in the resource configuration page, at least one resource configuration item corresponding to the target resource type; determine the resource configuration information generated based on the at least one resource configuration item; generate the resource to be transferred corresponding to the at least one target resource type according to the resource configuration information.

Further, on the basis of any one of the above embodiments, the resource configuration page includes the at least two resource types. The generating module is configured to: in response to a selection of the resource type, determine at least one selected target resource type.

Further, on the basis of any one of the above embodiments, the generating module is configured to determine a target resource type, the target resource type being determined based on at least one of: a certain date matching a current date, a media content type corresponding to the interaction media content, a topic type corresponding to the target interaction topic, or an interaction type corresponding to the predetermined interaction operation.

Further, on the basis of any one of the above embodiments, the apparatus further includes: a display module, configured to display, in a display page, a resource transfer control. A transfer module, configured to, in response to a trigger on the resource transfer control, transfer at least part of the resource to be transferred to the first user.

Further, on the basis of any one of the above embodiments, the apparatus further includes: a display module, configured to displaying the media content generation page, and displaying, in the media content generation page, the interaction control associated with the predetermined interaction operation; a generation module, configured to obtain a first media content associated with the target interaction topic generated in the media content generation page; a determining module, configured to determine the target interaction topic generated based on the interaction control, and determine at least one second user determined based on the interaction control; a processing module, configured to the interaction media content according to the first media content, the interaction control, and the determined at least one second user.

FIG. 10 is a schematic structural diagram of an apparatus for media content processing according to an embodiment of the present disclosure, which is applied to a client of the third user. As shown in FIG. 10, the apparatus includes a playing module 1001, an obtaining module 1002, a second display module 1003, and a transfer module 1004. The playing module 1001 is configured to play, in a media content playing page, an interaction media content associated with a resource to be transferred, the interaction media content including an interaction control associated with a predetermined interaction operation, the interaction control including a target interaction topic; an obtaining module 1002, configured to obtain a predetermined interaction operation associated with the target interaction topic performed by the third user based on the interaction control; a second display module 1003, configured to in response to a completion of a posting operation by the third user in a media content generation page, display a resource transfer control in a display page; and a transfer module 1004, configured to, in response to a trigger on the resource transfer control, transferring at least part of the resource to be transferred associated with the interaction media content to the third user, the third user including a second user determined by the first user in a media content generation page for generating the interaction media content.

Further, on the basis of any one of the above embodiments, the playing module is configured to in response to a switching operation by the third user on a media content stream in the media content playing page, play the interaction media content associated with the resource to be transferred; or, obtaining interaction reminder information associated with the predetermined interaction operation, and in response to a trigger on the interaction reminder information by the third user, playing the interaction media content associated with the resource to be transferred.

Further, on the basis of any one of the above embodiments, the obtaining module is configured to: in response to a trigger on the interaction control by the third user, display the media content generation page, the media content generation page including the interaction control; obtain a target media content associated with the target interaction topic generated in the media content generation page and post the target media content, thereby completing the predetermined interaction operation by the third user.

Further, on the basis of any one of the above embodiments, the resource to be transferred includes at least two resource types; and the transfer module is configured to: in response to a selection of a resource type to be obtained, transfer the at least part of the resource to be transferred corresponding to the selected resource type to be obtained to the third user.

Further, on the basis of any one of the above embodiments, the transfer module is configured to: in response that the third user is the second user, determine at least one first resource type corresponding to the second user; in response to a selection of the at least one first resource type, transfer at least part of the resource to be transferred corresponding to the selected target first resource type to the third user; or, the transfer module is configured to in response that the third user is not the second user, determine a second resource type corresponding to the third user; transfer the at least part of the resource to be transferred corresponding to the second resource type to the third user.

Further, on the basis of any one of the above embodiments, the transfer module is configured to: determine whether the third user is the second user, and obtaining a determination result, and/or determining a completion status of the predetermined interaction operation performed based on the interaction control; determine a resource transfer quantity level according to the determination result and/or the completion status; in response to the trigger on the resource transfer control, transfer, to the third user, a target resource among the resource to be transferred matching the resource transfer quantity level.

Further, on the basis of any one of the above embodiments, the interaction control in the interaction media content is displayed in a first display style corresponding to a certain date or a resource type corresponding to the resource to be transferred.

Further, on the basis of any one of the above embodiments, the interaction control in the target media content associated with the target interaction topic generated by the third user based on the interaction control is displayed in a predetermined second display style.

The device provided in the present embodiment may be configured to perform the technical solutions in the above method embodiments, and implementation principles and technical effects thereof are similar, and details are not described herein again in the present embodiment.

**In** order to implement the above embodiments, an embodiment of the present disclosure further provides an electronic device, including: a processor and a memory.

The memory stores computer-executable instructions.

The processor executes the computer executable instruction stored in the memory, so that the processor executes the method for virtual resource transfer according to any one of the above embodiments.

FIG. 11 is a schematic structural diagram of an electronic device according to an embodiment of the present disclosure. As shown in FIG. 11, the electronic device 1100 may be terminal device or server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 11 is merely an example, and should not impose any limitation on the functions and scope of use of the embodiments of the present disclosure.

As shown in FIG. 11, the electronic device 1100 may include a processing device (for example, a central processing unit, a graphics processor, etc.) 1101, which may perform various appropriate actions and processing according to a program stored in a read only memory (ROM) 1102 or a program loaded into a random access memory (RAM) 1103 from a storage device 1108. In the RAM 1103, various programs and data required by the operation of the electronic device 1100 are also stored. The processing device 1101, the ROM 1102, and the RAM 1103 are connected to each other through a bus 1104. Input/output (I/O) interface 1105 is also connected to bus 1104.

Generally, the following devices may be connected to the I/O interface 1105: an input device 1106 including, for example, a touch screen, a touch pad, a keyboard, a mouse, a camera, a microphone, an accelerometer, a gyroscope, etc.; an output device 1107 including, for example, a liquid crystal display (LCD), a speaker, a vibrator, etc.; a storage device 1108 including, for example, a magnetic tape, a hard disk, etc.; and a communication device 1109. The communication device 1109 may allow the electronic device 1100 to communicate wirelessly or wired with other devices to exchange data. While FIG. 11 shows an electronic device 1100 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a computer readable medium, the computer program including program code for performing the method shown in the flowchart. In such embodiments, the computer program may be downloaded and installed from the network through the communication device 1109, or installed from the storage device 1108, or from the ROM 1102. When the computer program is executed by the processing apparatus 1101, the above functions defined in the method of the embodiments of the present disclosure are performed.

It should be noted that the computer-readable medium described above may be a computer readable signal medium, a computer readable storage medium, or any combination of the above two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the above. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the above.

An embodiment of the present disclosure further provides a computer-readable storage medium, where the computer-readable storage medium stores computer-executable instructions which, when executed by the processor, implement the method for virtual resource transfer according to any one of the above embodiments.

An embodiment of the present disclosure further provides a computer program product, including a computer program which, when executed by a processor, implements the method for virtual resource transfer according to any one of the above embodiments.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the above embodiments.

Computer program code for performing the operations of the present disclosure may be written in one or more programming languages, including object-oriented programming languages, such as Java, Smalltalk, C + +, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowcharts or block diagrams may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software or may be implemented in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or apparatuses, or any suitable combination of the above. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

In the first aspect, a method for virtual resource transfer is provided according to one or more embodiments of the present disclosure, applied to a client of a first user, including:
displaying, in a media content generation page, a pre-generated interaction media content and a predetermined resource configuration control, the interaction media content including an interaction control associated with a predetermined interaction operation, the interaction control including a target interaction topic, the predetermined interaction operation being associated with the target interaction topic;
determining at least one second user associated with the target interaction topic;
in response to a trigger on the resource configuration control by a first user, displaying a resource configuration page;
generating a resource to be transferred associated with the interaction media content according to resource configuration information generated in the resource configuration page by the first user;
posting the interaction media content, to enable at least one third user to meet a predetermined condition to perform the predetermined interaction operation based on the interaction control of the posted interaction media content, thereby transferring at least part of the resource to be transferred, the third user including the second user.

According to one or more embodiments of the present disclosure, where after generating the resource to be transferred associated with the interaction media content according to the resource configuration information generated in the resource configuration page by the first user, the method further includes:
determining whether a current date matches any certain date;
If yes, switching a display style of the interaction control to a target display style corresponding to the certain date; and/or
After generating the resource to be transferred associated with the interaction media content according to the resource configuration information generated in the resource configuration page by the user, the method further includes:
   determining a resource type corresponding to the resource to be transferred;
   switching a display style of the interaction control to a target display style matching the resource type.

According to one or more embodiments of the present disclosure, where the third user meeting the predetermined condition is the second user.

**According** to one or more embodiments of the present disclosure, where the resource to be transferred includes at least two resource types; and the generating resource to be transferred associated with the interaction media content according to resource configuration information generated in the resource configuration page by the first user includes:
determining at least one target resource type meeting a predetermined condition;
displaying, in the resource configuration page, at least one resource configuration item corresponding to the target resource type;
determining the resource configuration information generated by the first user based on at least one resource configuration item;
generating the resource to be transferred corresponding to at least one target resource type according to the resource configuration information.

According to one or more embodiments of the present disclosure, the resource configuration page includes at least two resource types; the determining at least one target resource type meeting a predetermined condition includes:
in response to a selection of the resource type by the first user, determining at least one selected target resource type by the first user.

According to one or more embodiments of the present disclosure, where the determining at least one target resource type meeting a predetermined condition includes:
determining a target resource type, the target resource type being determined based on at least one of: a certain date matching a current date, a media content type corresponding to the interaction media content, a topic type corresponding to the target interaction topic, or an interaction type corresponding to the predetermined interaction operation.

According to one or more embodiments of the present disclosure, where after posting the interaction media content, the method further includes:
displaying, in a display page, a resource transfer control;
in response to a trigger on the resource transfer control by the first user, transferring at least part of the resource to be transferred to the first user.

According to one or more embodiments of the present disclosure, where displaying, in a media content generation page, a pre-generated interaction media content and a predetermined resource configuration control, the method further includes:
displaying the media content generation page, and displaying, in the media content generation page, the interaction control associated with the predetermined interaction operation;
obtaining a first media content associated with the target interaction topic generated in the media content generation page by the first user;
determining the target interaction topic generated based on the interaction control, and determining at least one second user determined based on the interaction control;
generating the interaction media content according to the first media content, the interaction control, and the determined at least one second user by the first user.

In a second aspect, a method for virtual resource transfer is provided according to one or more embodiments of the present disclosure, applied to a client of a third user, including:
playing, in a media content playing page, an interaction media content associated with a resource to be transferred, the interaction media content including an interaction control associated with a predetermined interaction operation, the interaction control including a target interaction topic;
obtaining a predetermined interaction operation associated with the target interaction topic performed based on the interaction control by the third user;
in response to a completion of the predetermined interaction operation in a media content generation page by the third user, displaying a resource transfer control in a display page;
in response to a trigger on the resource transfer control by the third user, transferring at least part of the resource to be transferred associated with the interaction media content to the third user, the third user including a second user determined by the first user in a media content generation page for generating the interaction media content.

According to one or more embodiments of the present disclosure, where playing, in the media content playing page, an interaction media content associated with resource to be transferred includes:
in response to a switching operation on a media content stream in the media content playing page, playing the interaction media content associated with the resource to be transferred;
   or,
obtaining interaction reminder information associated with the predetermined interaction operation, and in response to a trigger on the interaction reminder information, playing the interaction media content associated with the resource to be transferred.

According to one or more embodiments of the present disclosure, where obtaining a predetermined interaction operation associated with the target interaction topic executed based on the interaction control includes:
in response to a trigger on the interaction control by the third user, displaying the media content generation page, the media content generation page including the interaction control;
obtaining a target media content associated with the target interaction topic generated in the media content generation page by the third user and posting the target media content, thereby completing the predetermined interaction operation.

According to one or more embodiments of the present disclosure, where the resource to be transferred includes at least two resource types; and in response to a selection operation by the third user on the resource transfer control, transferring at least part of the resource to be transferred associated with the interaction media content to the third user includes:
**in** response to a selection of a resource type to be obtained by the third user, transferring the at least part of the resource to be transferred corresponding to the selected resource type to be obtained that is selected by the third user to the third user.

According to one or more embodiments of the present disclosure, where in response to a trigger on the resource transfer control by the third user, transferring at least part of the resource to be transferred associated with the interaction media content to the third user includes:
in response that the third user is the second user, determining at least one first resource type corresponding to the second user;
in response to a selection of the at least one first resource type by the third user, transferring at least part of the resource to be transferred corresponding to the selected target first resource type selected by the third user to the third user; or
in response to a trigger on the resource transfer control by the first user, transferring at least part of the resource to be transferred associated with the interaction media content to the third user includes:
in response that the third user is not the second user, determining a second resource type corresponding to the third user;
transferring the at least part of the resource to be transferred corresponding to the second resource type to the third user.

According to one or more embodiments of the present disclosure, where in response to a trigger on the resource transfer control by the third user, transferring at least part of the resource to be transferred associated with the interaction media content to the third user includes:
determining whether the third user is the second user, and obtaining a determination result, and/or determining a completion status of the predetermined interaction operation performed based on the interaction control;
determining a resource transfer quantity level according to the determination result and/or the completion status;
**in** response to the trigger on the resource transfer control, transferring, to the third user, a target resource among the resource to be transferred matching the resource transfer quantity level.

According to one or more embodiments of the present disclosure, where the interaction control in the interaction media content is displayed in a first display style corresponding to a certain date or a resource type corresponding to the resource to be transferred.

According to one or more embodiments of the present disclosure, where the interaction control in the target media content associated with the target interaction topic generated by the third user based on the interaction control is displayed in a predetermined second display style.

According to a third aspect, an apparatus for virtual resource transfer is provided according to one or more embodiments of the present disclosure, applied to a client of a first user, including:
a first display module, configured to display, in a media content generation page, a pre-generated interaction media content and a predetermined resource configuration control, the interaction media content including an interaction control associated with a predetermined interaction operation, the interaction control including a target interaction topic, the predetermined interaction operation being associated with the target interaction topic;
a determining module, configured to determine at least one second user associated with the target interaction topic;
a processing module, configured to, in response to a trigger on the resource configuration control, display a resource configuration page;
a generating module, configured to generate a resource to be transferred associated with the interaction media content according to resource configuration information generated in the resource configuration page;
a posting module, configured to post the interaction media content, to enable at least one third user meeting a predetermined condition to perform the predetermined interaction operation based on the interaction control of the posted interaction media content, thereby transferring at least part of the resource to be transferred, the third user including the second user.

According to one or more embodiments of the present disclosure, the apparatus further includes:
a determining module, configured to determine whether a current date matches any certain date;
a switching module, configured to, if yes, switch a display style of the interaction control to a target display style corresponding to the certain date; and / or
the apparatus further includes:
   a determining module is further configured to determine a resource type corresponding to the resource to be transferred;
   a switching module is further configured to a display style of the interaction control to a target display style matching the resource type.

According to one or more embodiments of the present disclosure, the third user meeting the predetermined condition is the second user.

According to one or more embodiments of the present disclosure, the resource to be transferred includes at least two resource types; and the generating module is configured to:
determine at least one target resource type meeting a predetermined condition;
display, in the resource configuration page, at least one resource configuration item corresponding to the target resource type;
determine the resource configuration information generated based on the at least one resource configuration item;
generate the resource to be transferred corresponding to the at least one target resource type according to the resource configuration information.

According to one or more embodiments of the present disclosure, the resource configuration page includes the at least two resource types; and the generating module is configured to:
in response to a selection of the resource type, determine at least one selected target resource type.

According to one or more embodiments of the present disclosure, the generating module is configured to:
determine a target resource type, the target resource type being determined based on at least one of: a certain date matching a current date, a media content type corresponding to the interaction media content, a topic type corresponding to the target interaction topic, or an interaction type corresponding to the predetermined interaction operation.

According to one or more embodiments of the present disclosure, the apparatus further includes:

A display module, configured to display, in a display page, a resource transfer control;

A transfer module, configured to, in response to a trigger on the resource transfer control, transferring at least part of the resource to be transferred to the first user.

According to one or more embodiments of the present disclosure, the apparatus further includes:
a display module, configured to display the media content generation page, and display, in the media content generation page, the interaction control associated with the predetermined interaction operation;
a generation module, configured to obtain a first media content associated with the target interaction topic generated in the media content generation page;
a determining module, configured to determine the target interaction topic generated based on the interaction control, and determining at least one second user determined based on the interaction control;
a processing module, configured to generate the interaction media content according to the first media content, the interaction control, and the determined at least one second user.

According to a fourth aspect, an apparatus for media content processing is provided according to one or more embodiments of the present disclosure, applied to a client of a third user, including:
a playing module, configured to, in a media content playing page, an interaction media content associated with a resource to be transferred, the interaction media content including an interaction control associated with a predetermined interaction operation, the interaction control including a target interaction topic;
an obtaining module, configured to obtain a predetermined interaction operation associated with the target interaction topic performed based on the interaction control;
a second display module, configured to in response to a completion of the predetermined interaction operation in a media content generation page, display a resource transfer control in a display page;
a transfer module, configured to, in response to a trigger on the resource transfer control by the third user, transfer at least part of the resource to be transferred associated with the interaction media content to the third user, the third user including a second user determined by the first user in a media content generation page for generating the interaction media content.

According to one or more embodiments of the present disclosure, the playing module is configured to:
in response to a switching operation on a media content stream in the media content playing page, play the interaction media content associated with the resource to be transferred;
   or,
obtain interaction reminder information associated with the predetermined interaction operation, and in response to a trigger on the interaction reminder information, playing the interaction media content associated with the resource to be transferred.

According to one or more embodiments of the present disclosure, the obtaining module is configured to:
in response to a trigger on the interaction control, display the media content generation page, the media content generation page including the interaction control;
obtain a target media content associated with the target interaction topic generated in the media content generation page and post the target media content, thereby completing the predetermined interaction operation.

According to one or more embodiments of the present disclosure, the resource to be transferred includes at least two resource types; and the transfer module is configured to:
in response to a selection of a resource type to be obtained, transfer the at least part of the resource to be transferred corresponding to the selected resource type to be obtained to the third user.

According to one or more embodiments of the present disclosure, the transfer module is configured to:
in response that the third user is the second user, determine at least one first resource type corresponding to the second user;
in response to a selection of the at least one first resource type, transferring at least part of the resource to be transferred corresponding to the selected target first resource type to the third user;
or, the transfer module is configured to:
in response that the third user is not the second user, determine a second resource type corresponding to the third user;
transfer the at least part of the resource to be transferred corresponding to the second resource type to the third user.

According to one or more embodiments of the present disclosure, the transfer module is configured to:
determine whether the third user is the second user, and obtain a determination result, and/or determining a completion status of the predetermined interaction operation performed based on the interaction control;
determine a resource transfer quantity level according to the determination result and/or the completion status;
in response to the trigger on the resource transfer control, transfer, to the third user, a target resource among the resource to be transferred matching the resource transfer quantity level.

According to one or more embodiments of the present disclosure, the interaction control in the interaction media content is displayed in a first display style corresponding to a certain date or a resource type corresponding to the resource to be transferred.

According to one or more embodiments of the present disclosure, the interaction control in the target media content associated with the target interaction topic generated by the third user based on the interaction control is displayed in a predetermined second display style.

According to a fifth aspect, an electronic device is provided according to one or more embodiments of the present disclosure, including: at least one processor and a memory;
the memory stores computer executable instructions;
the at least one processor executes the computer-executable instruction stored in the memory, so that the at least one processor executes the method for virtual resource transfer according to the first aspect and various possible designs of the first aspect or the second aspect and various possible designs of the second aspect.

According to a sixth aspect, a computer-readable storage medium is provided according to one or more embodiments of the present disclosure, where the computer-readable storage medium stores computer-executable instructions which, when executed by the processor, implement the method for virtual resource transfer according to the first aspect and various possible designs of the first aspect or the second aspect and various possible designs of the second aspect.

According to a seventh aspect, a computer program product is provided according to one or more embodiments of the present disclosure, including a computer program which, when executed by a processor, implements the method for virtual resource transfer according to the first aspect and various possible designs of the first aspect or the second aspect and the various possible designs of the second aspect.

The above description is merely an illustration of the preferred embodiments of the present disclosure and the principles of the application. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and / or methodological acts, it is to be understood that the subject matter defined in the appended claims is not necessarily limited to the specific features or acts described above. Rather, the specific features and acts described above are merely exemplary forms of implementing the claims.

## Claims

1. A method for virtual resource transfer, applied to a client of a first user, wherein the method comprises:
displaying, in a media content generation page, a pre-generated interaction media content and a predetermined resource configuration control, the interaction media content comprising an interaction control associated with a predetermined interaction operation, the interaction control comprising a target interaction topic, the predetermined interaction operation being associated with the target interaction topic;
determining at least one second user associated with the target interaction topic;
in response to a trigger on the resource configuration control, displaying a resource configuration page;
generating a resource to be transferred associated with the interaction media content according to resource configuration information generated in the resource configuration page;
posting the interaction media content, to enable at least one third user meeting a predetermined condition to perform the predetermined interaction operation based on the interaction control of the posted interaction media content, thereby transferring at least part of the resource to be transferred, the user comprising the second user.

2. The method of claim 1, wherein after generating the resource to be transferred associated with the interaction media content according to the resource configuration information generated in the resource configuration page, the method further comprises:
determining whether a current date matches any certain date;
if yes, switching a display style of the interaction control to a target display style corresponding to the certain date; and/or
after generating the resource to be transferred associated with the interaction media content according to the resource configuration information generated in the resource configuration page, the method further comprises:
determining a resource type corresponding to the resource to be transferred;
switching a display style of the interaction control to a target display style matching the resource type.

3. The method of claim 1, wherein the third user meeting the predetermined condition is the second user.

4. The method of claim 1, wherein the resource to be transferred comprises at least two resource types; and the generating resource to be transferred associated with the interaction media content according to resource configuration information generated in the resource configuration page comprises:
determining at least one target resource type meeting a predetermined condition;
displaying, in the resource configuration page, at least one resource configuration item corresponding to the target resource type;
determining the resource configuration information generated based on the at least one resource configuration item;
generating the resource to be transferred corresponding to the at least one target resource type according to the resource configuration information.

5. The method of claim 4, wherein the resource configuration page comprises the at least two resource types; the determining at least one target resource type meeting a predetermined condition comprises:
in response to a selection of the resource type, determining at least one selected target resource type.

6. The method of claim 4, wherein the determining at least one target resource type meeting a predetermined condition comprises:
determining a target resource type, the target resource type being determined based on at least one of: a certain date matching a current date, a media content type corresponding to the interaction media content, a topic type corresponding to the target interaction topic, or an interaction type corresponding to the predetermined interaction operation.

7. The method of any of claims 1 to 6, wherein after posting the interaction media content, the method further comprises:
displaying, in a display page, a resource transfer control;
in response to a trigger on the resource transfer control, transferring at least part of the resource to be transferred to the first user.

8. The method of any of claims 1 to 6, wherein before displaying, in a media content generation page, a pre-generated interaction media content and a predetermined resource configuration control, the method further comprises:
displaying the media content generation page, and displaying, in the media content generation page, the interaction control associated with the predetermined interaction operation;
obtaining a first media content associated with the target interaction topic generated in the media content generation page;
determining the target interaction topic generated based on the interaction control, and determining at least one second user determined based on the interaction control;
generating the interaction media content according to the first media content, the interaction control, and the determined at least one second user.

9. A method for virtual resource transfer, applied to a client of a third user, wherein the method comprises:
playing, in a media content playing page, an interaction media content associated with a resource to be transferred, the interaction media content comprising an interaction control associated with a predetermined interaction operation, the interaction control comprising a target interaction topic;
obtaining a predetermined interaction operation associated with the target interaction topic performed based on the interaction control;
in response to a completion of the predetermined interaction operation in a media content generation page, displaying a resource transfer control in a display page;
in response to a trigger on the resource transfer control by the third user, transferring at least part of the resource to be transferred associated with the interaction media content to the third user, the third user comprising a second user determined by the first user in a media content generation page for generating the interaction media content.

10. The method of claim 9, wherein playing, in the media content playing page, an interaction media content associated with resource to be transferred comprises:
in response to a switching operation on a media content stream in the media content playing page, playing the interaction media content associated with the resource to be transferred;
or,
obtaining interaction reminder information associated with the predetermined interaction operation, and in response to a trigger on the interaction reminder information, playing the interaction media content associated with the resource to be transferred.

11. The method of claim 10, wherein obtaining a predetermined interaction operation associated with the target interaction topic executed based on the interaction control comprises:
in response to a trigger on the interaction control, displaying the media content generation page, the media content generation page comprising the interaction control;
obtaining a target media content associated with the target interaction topic generated in the media content generation page and posting the target media content, thereby completing the predetermined interaction operation.

12. The method of claim 9, wherein the resource to be transferred comprises at least two resource types; and transferring at least part of the resource to be transferred associated with the interaction media content to the third user comprises:
in response to a selection of a resource type to be obtained, transferring the at least part of the resource to be transferred corresponding to the selected resource type to be obtained to the third user.

13. The method of claim 9, wherein in response to a trigger on the resource transfer control, transferring at least part of the resource to be transferred associated with the interaction media content to the third user comprises:
in response that the third user is the second user, determining at least one first resource type corresponding to the second user;
in response to a selection of the at least one first resource type, transferring at least part of the resource to be transferred corresponding to the selected target first resource type to the third user; or
in response to a trigger on the resource transfer control, transferring at least part of the resource to be transferred associated with the interaction media content to the third user comprises:
in response that the third user is not the second user, determining a second resource type corresponding to the third user;
transferring the at least part of the resource to be transferred corresponding to the second resource type to the third user.

14. The method of claim 9, wherein in response to a trigger on the resource transfer control, transferring at least part of the resource to be transferred associated with the interaction media content to the third user comprises:
determining whether the third user is the second user, and obtaining a determination result, and/or determining a completion status of the predetermined interaction operation performed based on the interaction control;
determining a resource transfer quantity level according to the determination result and/or the completion status;
in response to the trigger on the resource transfer control, transferring, to the third user, a target resource among the resource to be transferred matching the resource transfer quantity level.

15. The method of any of claims 11 to 14, wherein the interaction control in the interaction media content is displayed in a first display style corresponding to a certain date or a resource type corresponding to the resource to be transferred.

16. The method of claim 15, wherein the interaction control in the target media content associated with the target interaction topic generated by the third user based on the interaction control is displayed in a predetermined second display style.

17. Anapparatus for media content processing apparatus, applied to a client of a first user, wherein the apparatus comprises:
a first display module, configured to display, in a media content generation page, a pre-generated interaction media content and a predetermined resource configuration control, the interaction media content comprising an interaction control associated with a predetermined interaction operation, the interaction control comprising a target interaction topic, the predetermined interaction operation being associated with the target interaction topic;
a determining module, configured to determine at least one second user associated with the target interaction topic;
a processing module, configured to, in response to a trigger on the resource configuration control, display a resource configuration page;
a generating module, configured to generate a resource to be transferred associated with the interaction media content according to resource configuration information generated in the resource configuration page;
a posting module, configured to post the interaction media content, to enable at least one third user meeting a predetermined condition to perform the predetermined interaction operation based on the interaction control of the posted interaction media content, thereby transferring at least part of the resource to be transferred, the third user comprising the second user.

18. An apparatus for media content processing, applied to a client of a third user, comprising:
a playing module, configured to play, in a media content playing page, an interaction media content associated with a resource to be transferred, the interaction media content comprising an interaction control associated with a predetermined interaction operation, the interaction control comprising a target interaction topic;
an obtaining module, configured to obtain a predetermined interaction operation associated with the target interaction topic performed based on the interaction control;
a second display module, configured to in response to a completion of a posting operation in a media content generation page, display a resource transfer control in a display page;
a transfer module, configured to, in response to a trigger on the resource transfer control, transferring at least part of the resource to be transferred associated with the interaction media content to the third user, the third user comprising a second user determined by the first user in a media content generation page for generating the interaction media content.

19. An electronic device, wherein the electronic device comprises: a processor and a memory;
the memory stores computer-executable instructions;
the processor executes the computer-executable instructions stored in the memory, so that the processor executes the virtual resource transfer method of any of claims 1 to 8 or claims 9 to 16.

20. A computer-readable storage medium, wherein the computer-readable storage medium stores computer-executable instructions, and the computer-executable instructions, when executed by the processor, implement the method for virtual resource transfer of any of claims 1 to 8 or claims 9 to 16.

21. A computer program product, comprising a computer program, wherein the computer program, when executed by a processor, implements the method for virtual resource transfer of any of claims 1 to 8 or claims 9 to 16.
